# EUROPÄISCHE PATENTSCHRIFT

(11) **EP 0 928 919 B1**
(45) Veröffentlichungstag und Bekanntmachung des Hinweises auf die Patenterteilung: **19.11.2003**
(21) Anmeldenummer: 98123900.7
(22) Anmeldetag: 16.12.1998
(51) Int. Cl.: F16K 31/00, F16K 15/18

(54) **Schnellschaltendes Ventil**
Fast-switching valve
Clapet de commutation rapide

(30) Priorität: 07.01.1998 DE 19800257
(43) Veröffentlichungstag der Anmeldung: 14.07.1999
(73) Patentinhaber: Deutsches Zentrum für Luft- und Raumfahrt e.V., 53175 Bonn (DE)
(72) Erfinder: Neuhaus, Dietmar, Dr., 40591 Düsseldorf (DE)
(74) Vertreter: Selting, Günther, Dipl.-Ing.

(56) Entgegenhaltungen:
- DE-C- 19 734 845
- GB-A- 1 410 312
- US-A- 3 884 417
- US-A- 4 067 496
- US-A- 4 166 605
- US-A- 5 037 062

## Beschreibung

Die Erfindung betrifft ein schnellschaltendes Ventil mit einem Raum, der eine Zuströmöffnung und eine Abströmöffnung aufweist und einen Ventilsitz enthält, der von einem bewegbaren Ventilkörper verschließbar ist.

Für bestimmte Anwendungszwecke werden schnellschaltende Ventile benötigt, die im Stande sind, einen Fluidstrom schlagartig durchzulassen und die eine hohe Schaltfrequenz ermöglichen. Anwendungszwecke für solche Ventile sind beispielsweise Spektrometer, bei denen Gasproben von genau bemessenem Volumen einer spektrographischen Untersuchung unterzogen werden, die Beaufschlagung der Steuerdüsen von Satelliten und das Gebiet der Mikrosystemtechnik. Für derartige Anwendungen werden Ventile mit extrem kurzen Schaltzeiten und hoher Wiederholfrequenz benötigt.

Aus DE 38 35 788 A1 ist ein schnellschaltendes Kugelventil bekannt, das eine in einem Ventilsitz sitzende Kugel aufweist. Durch eine quer zum Ventilsitz wirkende Betätigungsvorrichtung kann die Kugel mit einem seitlichen Stoß vom Ventilsitz gelöst werden. Durch die daraufhin einsetzende Strömung wird die Kugel wieder auf den Ventilsitz zurückgeführt. Ventile dieser Bauart erfordern eine genaue Ausrichtung der Stoßvorrichtung und es ist schwierig eine reproduzierbare Stoßbewegung auszuführen.

In einer nicht vorveröffentlichten älteren Patentanmeldung DE 197 34 845.9 ist ein schnellschaltendes Ventil beschrieben, bei dem der Ventilsitz von einem Aktuator getragen ist, der auf ein Betätigungssignal hin den Ventilsitz schneller von dem Ventilkörper wegbewegt als der Ventilkörper zu folgen vermag. Bei dieser Bauart wird der Abstand, den der Ventilkörper vom Ventilsitz einnimmt, durch den Betrag bestimmt, um den sich der Ventilsitz bewegt. Daher haben diese Ventile nur relativ kurze Öffnungszeiten.

Ein Ventil, von dem der Oberbegriff des Patentanspruchs 1 ausgeht, ist bekannt aus US-A-4,067,496. Dieses Ventil weist einen kugelförmigen Ventilkörper auf. Ein Aktuator beschleunigt das Gehäuse parallel zur Achse des Ventilsitzes, gegen den der Fluiddruck den Ventilkörper drückt. Zur Begrenzung des Weges des Ventilkörpers ist an dem Gehäuse ein Käfig aus vorstehenden Stangen oder Speichen vorgesehen.

Der Erfindung liegt die Aufgabe zugrunde, ein schnellschaltendes Ventil für gasförmige und flüssige Medien zu schaffen, das kurze Schaltzeiten ermöglicht, andererseits aber den Ventilkörper um ein beträchtliches Maß von dem Ventilsitz entfernt, so daß die Ventilöffnung vollständig freigegeben wird und längere Öffnungszeiten möglich sind.

Die Lösung dieser Aufgabe erfolgt erfindungsgemäß mit den im Patentanspruch 1 angegebenen Merkmalen.

Im Unterschied zu den bekannten Ventilen wird das erfindungsgemäße Ventil dadurch geöffnet, daß der Ventilsitz zusammen mit einem Stößel von dem Aktuator bewegt wird. Stößel und Ventilsitz führen hierbei keine Relativbewegung aus. Die Bewegung des Ventilsitzes erfolgt so schnell, daß die Kugel sich zunächst alleine aufgrund ihrer Massenträgheit von dem Ventilsitz entfernt, dann auf den Stößel trifft und durch diesen Impuls vom Ventilsitz weggeschleudert wird. Die Bewegung des Aktuators dient zunächst dazu, Kugel und Ventilsitz voneinander zu trennen. Dabei trifft der Stößel mit hohem Impuls auf die Kugel und diese wird von dem Ventilsitz, von dem sie soeben abgehoben hat, in die entgegengesetzte Richtung weggeschleudert. Hierdurch wird erreicht, daß die Kugel sich von dem Ventilsitz vollständig entfernt und die Ventilöffnung nicht nur geöffnet, sondern in höherem Maße freigelegt wird als dies bei einer bloßen Verschiebung der Fall wäre.

Das erfindungsgemäße schnellschaltende Ventil kann so ausgebildet werden, daß sich kurze Schaltzeiten in der Größenordnung von 100 µs und kleiner ergeben. In der Praxis wurden Wiederholfrequenzen von 400 bis 1000 Hz erreicht. Die Ansprechgeschwindigkeit und die Wiederholfrequenz hängen natürlich von der Baugröße des Ventils und insbesondere auch von der Masse des Ventilkörpers ab. Der Ventilkörper sollte eine geringe Dichte haben, so daß seine Masse klein ist. Der Ventilkörper kann beispielsweise als Hohlkörper ausgebildet sein.

Das erfindungsgemäße Ventil ist insbesondere zum Schalten von Gasen vorgesehen. Es kann aber auch zum Schalten von Flüssigkeiten benutzt werden. Das Ventil eignet sich z. B. für die Kraftstoffeinspritzung bei Verbrennungsmotoren.

Der den Ventilsitz tragende Aktuator ist vorzugsweise als piezoelektrischer Kontraktionskörper ausgebildet, der sich auf ein Betätigungssignal hin zusammenzieht. Alternativ kann der Aktuator auch z. B. elektromagnetisch arbeiten. Wichtig ist, daß für eine kurze Zeit eine hohe Beschleunigung des Ventilsitzes erreicht wird, die größer ist als die Beschleunigung des unter der Einwirkung des Mediendruckes stehenden Ventilkörpers.

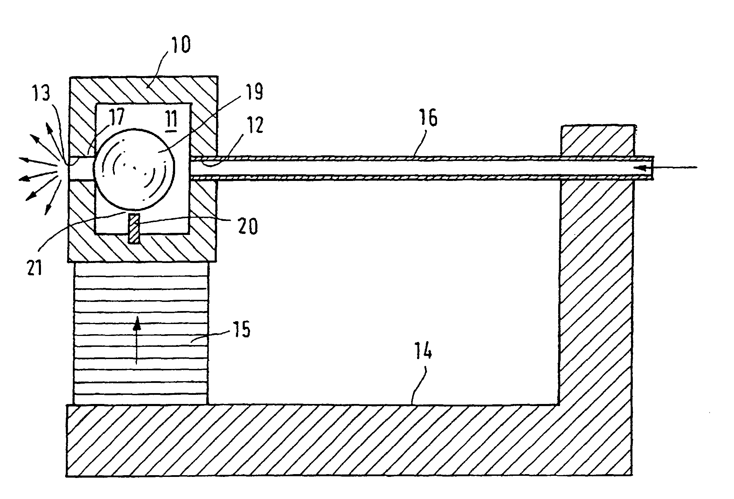

Im folgenden wird unter Bezugnahme auf die einzige Figur der Zeichnung ein Ausführungsbeispiel der Erfindung näher erläutert.

In der Zeichnung ist ein schmematischer Längsschnitt durch ein schnellschaltendes Ventil nach der Erfindung dargestellt.

Das Ventil weist ein Gehäuse 10 auf, das einen Raum 11 umschließt, welcher gegen die Umgebung abgeschlossen ist. Der Raum 11 weist eine Zuströmöffnung 12 und eine Abströmöffnung 13 auf, die entlang einer gemeinsamen Achse angeordnet sind. Die Zuströmöffnung 12 ist an eine (nicht dargestellte) Druckquelle für das zu beschaltende Medium angeschlossen, während die Abströmöffnung 13 mit dem Verbraucher in Verbindung steht.

Auf einer ortsfesten Halterung 14 ist ein Aktuator 15 angeordnet, der das Gehäuse 10 trägt. Die Halterung 14 dient ferner zur Befestigung einer flexiblen Rohr- oder Schlauchleitung 16, die mit der Zuströmöffnung 12 in Verbindung steht.

Der Aktuator 15 ist ein piezoelektrischer Kontraktionskörper, der aus zahlreichen piezoelektrischen Schichten besteht, zwischen denen dünne metallische Bleche angeordnet sind. Dadurch werden mehrere Kondensatoren mit piezoelektrischen Material als Dielektrikum gebildet. Wenn an die Bleche eine Spannung gelegt wird, dehnen sich die zwischen den Blechen befindlichen piezoelektrischen Schichten aus. Wird diese Spannung verringert oder abgeschaltet, ziehen sich die Schichten wieder zusammen.

Das Ventil weist an der Abströmöffnung 13 einen Ventilsitz 17 auf, der von einem Ventilkörper 19, der hier als Kugel ausgebildet ist, abdichtend verschlossen werden kann. An dem Gehäuse 10 ist ein Stößel 20 in Form eines starren Stifts angebracht, der radial in Richtung auf den Kugelmittelpunkt des Ventilkörpers 19 weist, wenn der Ventilkörper sich in der Schließposition befindet. Der Stößel 20 ist axial zu dem Aktuator 15 ausgerichtet, d.h. er weist in dieselbe Richtung, in der der Aktuator 15 den Stoß ausführt. Zwischen dem in der Schließstellung befindlichen Ventilkörper 19 und dem Stößel 20 befindet sich ein Zwischenraum oder Spalt 21 in der Größenordnung von einigen µm. Der Ventilkörper 19 und der Stößel 20 bestehen vorzugsweise aus Metall.

Das dargestellte Ventil arbeitet wie folgt: In der Schließstellung herrscht in dem Raum 11 der durch die Leitung 16 zugeführte Druck, wodurch der Ventilkörper 19 gegen den Ventilsitz 17 gedrückt wird. Dadurch wird die Abströmöffnung 13 verschlossen. Der Ventilkörper 19 befindet sich in geringem Abstand über dem Stößel 20. Zum kurzzeitigen Öffnen des Ventils wird an den Aktuator 15 ein elektrisches Impulssignal gelegt, wodurch der Aktuator 15 stoßartig in Längsrichtung expandiert. Dadurch wird das Gehäuse 10 quer zum Ventilsitz 17 beschleunigt. Der Ventilkörper 19 vermag infolge seiner Massenträgheit der Bewegung des Ventilsitzes 17 nicht zu folgen, so daß er den Ventilsitz 17 geringfügig öffnet. Danach schlägt der Stößel 20 gegen den Ventilkörper 19. Infolge dieses elastischen Stoßes wird der Ventilkörper 19 in Gegenrichtung zu dem Stößel 20 von dem Ventilsitz 17 weggeschleudert. Der Stößel 20 ist parallel zur Ebene des Ventilsitzes 17 ausgerichtet bzw. seine Stoßfläche oder Stirnfläche verläuft senkrecht zur Ebene des Ventilsitzes 17. Dadurch, daß der Ventilkörper 19 von dem Stößel 20 vom Ventilsitz fortgestoßen wird, öffnet das Ventil und das Fluid kann nunmehr an dem Ventilkörper 19 vorbei durch die Abströmöffnung 13 strömen. Durch die Wirkung dieser Strömung wird der Ventilkörper 19 wieder in Richtung auf den Ventilsitz 17 bewegt, um anschließend den Ventilsitz wieder zu verschließen. Der Aktuator 15 wird durch Beendigung der Erregerspannung wieder in den kontrahierten Zustand zurückversetzt.

Das Ventil arbeitet nicht nur im horizontalen Zustand, der in der Zeichnung dargestellt ist, sondern auch in jeder beliebigen anderen Orientierung. Dies liegt daran, daß die Strömungskräfte, die dem Ventilkörper 19 auf den Ventilsitz 17 zurückführen, bei einer hinreichenden Druckdifferenz zwischen Zuströmung und Abströmung weitaus größer sind als die Schwerkraftwirkung.

## Patentansprüche

1. Schnellschaltendes Ventil mit einem Gehäuse (10), das einen Raum (11) mit einer Zustromöffnung (12) und einer Abströmöffnung (13) aufweist und einen Ventilsitz (17) enthält, welcher von einem bewegbaren Ventilkörper (19) verschließbar ist, und mit einem den Ventilsitz (17) tragenden Aktuator (15), der auf ein Betätigungssignal hin den Ventilsitz (17) relativ zu dem Ventilkörper (19) bewegt,
**dadurch gekennzeichnet , dass**
der Aktuator (15) derart ausgerichtet ist, dass er das Gehäuse (10) quer zum Ventilsitz (17) beschleunigt, und dass der Ventilsitz mit einem parallel zur Ebene des Ventilsitzes (17) ausgerichteten auf den Ventilkörper (19) gerichteten Stößel (20) gekoppelt ist, der bei der Bewegung des Ventilsitzes (17) gegen den Ventilkörper (19) stößt.

2. Schnellschaltendes Ventil nach Anspruch 1, **dadurch gekennzeichnet, daß** der Aktuator (15) ein piezoelektrischer Körper ist.

3. Schnellschaltendes Ventil nach Anspruch 2, **dadurch gekennzeichnet, daß** der Aktuator (15) mehrere Schichten aus Piezomaterial mit dazwischen angeordneten Elektrodenschichten enthält.

## Claims

1. A quick-action valve with a housing (10) comprising a chamber (11) having an inflow opening (12) and an outflow opening (13) and comprising a valve seat (17) adapted to be closed by a movable valve body (19), the valve seat (17) being carried by an actuator (15) displacing the valve seat (17) relative to the valve body (19) in response to an actuation signal,
**characterized in that**
the actuator (15) is oriented such that it accelerates the housing (10) transversally to the valve seat (17), and that the valve seat is coupled to a plunger (20) oriented in parallel with the plane of the valve seat (17) and directed towards the valve body (19), said plunger hitting the valve body (19) when the valve seat (17) is moved.

2. The quick-action valve of claim 1, wherein the actuator (15) is a piezoelectric body.

3. The quick-action valve of claim 2, wherein the actuator (15) comprises a plurality of piezo material layers with intermediately disposed electrode layers.

## Revendications

1. Clapet de commutation rapide comprenant un carter (10) qui présente un espace (11) avec un orifice d'admission (12) et un orifice d'évacuation et qui contient un siège de clapet (17) pouvant être obturé par un corps de clapet (19) mobile, et comprenant un actionneur (15) qui porte le siège de clapet (17) et qui déplace le siège de clapet (17) par rapport au corps de clapet (19) suite à un signal d'actionnement
**caractérisé en ce que** l'actionneur (15) est orienté de manière à accélérer le carter (10) transversalement au siège de clapet (17), et **en ce que** le siège de clapet est couplé à un poussoir (20) orienté parallèlement au plan du siège de clapet (17) et dirigé vers le corps de clapet (19), qui pousse contre le corps de clapet (19) lors du mouvement du siège de clapet (17).

2. Clapet de commutation rapide selon la revendication 1, **caractérisé en ce que** l'actionneur (15) est un corps piézoélectrique.

3. Clapet de commutation rapide selon la revendication 2, **caractérisé en ce que** l'actionneur (15) contient plusieurs couches en matériau piézoélectrique avec des couches d'électrodes disposées entre ces dernières.
